# EUROPEAN PATENT SPECIFICATION

(11) **EP 0 702 832 B1**
(45) Date of publication and mention of the grant of the patent: **04.03.1998**
(21) Application number: 94917126.8
(22) Date of filing: 10.06.1994
(51) Int. Cl.: G11B 27/031, H04N 5/262, H04N 7/24

(54) **VIDEO EDITING SYSTEMS**
VIDEOSCHNITTSYSTEM
SYSTEMES DE MONTAGE VIDEO

(30) Priority: 10.06.1993 GB 9311991; 04.10.1993 GB 9320386
(43) Date of publication of application: 27.03.1996
(73) Proprietor: LIGHTWORKS EDITING SYSTEMS LTD, London, W1V 6AP (GB)
(72) Inventor: BAMBOROUGH, Paul, London N5 (GB)
(74) Representative: Butler, Michael John
(86) International application number: GB9401255
(87) International publication number: WO9429868

(56) References cited:
- EP-A- 0 392 753
- EP-A- 0 438 299
- EP-A- 0 526 064
- WO-A-90/07843
- WO-A-91/10321
- WO-A-92/07359
- RESEARCH DISCLOSURE, no.330, October 1991, HAVANT GB page 738, XP000264991 SILVER D.S. 'Dual Quality Recorder'
- FERNSEH UND KINO TECHNIK, vol.45, no.5, 1991, BERLIN DE, XP000229093 KRIEG P. 'Multimedia-Computer und die Zukunft des Film/Videoschnitts'

## Description

This specification relates to video editing systems.

In the production of a work recorded on video media, such as cinematographic films, video tapes, video discs and so forth, editing is required. For example, shots from several cameras will be cut and pasted together, there will be fades from one shot to another, and so forth.

In many current systems an edit decision list is produced. This is a list setting out which clips from which source are to be put together in what order to make the final product. There will also be instructions as to fading and so forth. In the case of films, an editor will work from a cut-list, cutting specified frames from appropriate reels of material and splicing them together as required. Separate information will be produced for "opticals" where optical printing is needed, say, to combine frames for a fade. In the case of video tapes it is known to supply the edit decision list in the form of computer software to equipment which will assemble a final video tape from various source tapes.

The end result is an artistic work on cinematographic film, video tape or other media, which is of "broadcast" quality; that is, the quality and resolution of the images is of the high standard appropriate to the ultimate playback system, be it a projector in a cinema, a tape to be broadcast by a television company, or a tape to be used as a master from which domestic quality tapes or video discs are produced.

It is inconvenient to work with broadcast quality media in the production of the edit list itself and indeed one object of using an edit list is that this is subsequently applied to the broadcast quality material. Accordingly, various "off line" systems have been developed. In these, lower resolution versions of the images are used by an editor to produce the edit decision list. In one early proposal, an editor would view and work with images from several video machines of nearer domestic than broadcasting quality. The tapes on these contained the same material - in terms of frames, time codes etc. as the original broadcast quality sources, but at a lower quality.

More recently, digital systems have been developed. Such systems produce low resolution, often data-compressed, digitised representations of the original source material. The digitised representations are stored in fast access storage media such as magnetic disks, optical disks and so forth, and are manipulated in random access memory. In the case of cinematographic films, it is first transcribed into suitable video media by a telecine machine such as the Rank Cintel URSA or BTS FDL 90, before the low resolution images are made. Once the decisions have been made, the edit decision list is produced and typically this is in the form of a listing on a diskette. The diskette is used with an on-line video editing system to produce the final broadcast quality product. This process is known as conforming.

Such off-line systems have been produced by EMC, Avid and OLE Limited (Lightworks).

It will be appreciated that the advantage of using lower resolution images, perhaps compressed up to 100 times, is that the power of the equipment (and thus its cost) can be less, in terms of processing speed, memory, storage requirements and so forth. Nevertheless, the image quality is still good enough for editors to work with.

Whilst such a two stage process is to some extent inconvenient, in terms of having to produce e.g. a diskette for an on line editing machine, it would be prohibitively expensive for all editing to be carried out on currently available on line editors. Time is also a factor, and high resolution images take longer to manipulate than the lower resolution images used in off line editing systems.

The problems are increasing as there are moves towards even higher resolution media. For example, High Definition Television ("HDTV") is planned. By way of example, a frame of material in an off line system - of low resolution and compressed - may occupy 20 to 50 Kb. At conventional broadcast quality resolution the frame may occupy 1 Mb of storage space. With HDTV material, it would occupy 5 Mb of space.

It is also proposed to use digitised film images at full cine resolution of eg. 3000 lines by 4000 pixels. Such images can be input into a digital system, manipulated, and then output at full resolution.

Such high resolution equipment is considerably more expensive than existing on line editing equipment and it is not cost effective to use it for routine editing and making edit decisions.

Accordingly, an object of the invention disclosed herein is to retain the cost effectiveness of off line editing whilst facilitating the production of the broadcast quality product.

There is disclosed in Research Disclosure No. 330 of October 1991 at page 738, a system for editing video material comprising:
(a) first digital data handling means for receiving and storing a sequence of image frames of relatively high quality;
(b) means for converting the sequence of image frames into a corresponding sequence of image frames of relatively low quality;
(c) second digital data handling means for receiving and storing the sequence of relatively low quality image frames;
(d) operator input means associated with the second data handling means to enable manipulation of the sequence of relatively low quality image frames for edit decisions to be made;
(e) communication means connected between the first and second data handling means, for communicating to the first data handling means edit decisions after manipulation of the frames in the second data handling means; and
(f) means within the first data handling means for producing an output sequence of relatively high quality image frames in accordance with the edit decisions communicated from the second data handling means.
   The present invention is characterised over this disclosure in that the edit decisions are communicated to the first data handling means substantially as such decisions are made; and in that the system further comprises
(g) means within the first data handling means for processing a first edit decision, and for manipulating the relatively high quality image frames accordingly, whilst the operator manipulates the relatively low quality frames in the second data handling means to make a second edit decision for communication to the first data handling means.

Thus, whilst the operator is spending time manipulating frames and e.g. assessing artistic possibilities before making an edit decision, the results of earlier decisions have been transmitted to the first data handling means. This then processes the decisions and applies them to the high quality images. Processing time in the first data handling means is used more effectively, and the intention is that shortly after the last edit decision has been made, the high quality output material will be available.

The material which the operator views and works with in the second data handling means is, in terms of artistic content, identical to that in the first data handling means. All of the same frames are available and coded to enable correlation with the frames in the first data handling means. The difference is that the images are of lower quality.

The relatively high quality image frames which the first data handling means processes, may be of conventional broadcast quality or of higher HDTV quality, or even of film resolution. In practice they may be slightly less than full broadcast quality for some applications.

In practice, in accordance with normal video editing procedures, a number of sequences will be held in the data handling means, and decisions made concerning the selection of frames. Generally, selection will be of a number of frames, i.e. a shorter clip from a complete sequence loaded in.

Depending upon the nature of the editing carried out by the operator, and upon the speed of the first data handling means, it is possible that the latter may be in an idle state between acting upon edit decisions.

It is therefore proposed that the first data handling means be in communication with a plurality of second data handling means. These may be operating on the same project, or on completely separate projects.

In preferred arrangements, the first data handling means receives high quality source material, and produces the lower quality material which is provided to the second data handling means. Thus the first data handling means preferably includes means for reducing the resolution of the images and/or compressing the data, for supply to the second data handling means.

The first data handling means must itself process images of high quality. Nevertheless a certain amount of compression is possible without adverse degradation of image quality, say 8 or 10:1. The resolution should be maintained.

Typically, therefore, images will be reduced in resolution - for example, by omitting alternate lines or by more sophisticated technique - and compressed by say 20:1 or more for supplying to the second data handling means. In the first data handling means the resolution of the source material will be maintained but compression of 8 to 10:1 may be used. This will assist operation but without visible degradation of picture quality.

The first and second data handling means will typically differ in terms of e.g. the memory, storage space, processor speed and so forth. The first data handling means will have increased, typically by four times, bandwidth. However, a common processor could be used. Indeed, the two data handling means could be combined in the same physical unit. The first data handling means could be used as a stand alone system, having for example sufficient power to handle four pictures at once, at full speed. These will be of lower resolution, perhaps similar or slightly better quality than those of the second data handling means.

They appear on the graphics screen as usual, but also on 4 separate video outputs. This opens the way to on-the-fly editing of multicamera material, as if working live or with multiple tape machines, but with all the advantages of random-access. One possibility is to take an EDL based on a live cut, import it, and then quickly improve it until it is perfect. This will be for sports and the like. The machine may have a fifth video output, so that the edit can be watched as it is built. Further aspects of "live editing" will be discussed below.

The machine can also work with much more sound simultaneously. It may have at least 8 real channels of production-quality sound, all playable at once. This can be upgraded to 16 real channels. There is a distinction between real channels and the number of tracks that can be laid - so-called virtual tracks. These, of course, have no real limits.

As discussed above, the machine can play pictures that are much less compressed and therefore of much higher quality. These pictures are of full horizontal resolution, and 50/60 fields. In practice they will be of a quality good enough for some on-line uses, such as news and some corporate work. They may not be full broadcast quality.

It is necessary to understand that the way in which large amounts of picture can be put into a computer is to compress them. Beyond 2-1 compression, the process is no longer lossless. That is, one cannot go back to exactly where one started. It then becomes a question of how far to go without noticing the losses. Current consensus seems to be that beyond 3-1 compression there is no longer a system that remains unnoticeable through repeated round-trips, such as will be experienced when adding effects etc. For pure delivery of finished product one can probably go up to 6 or 8-1 before noticing much at all, and standards are evolving for doing that. However, editing is not delivery, and does require round-trips.

For full broadcast quality, one cannot compress more than, say, 4-1, which is about 6 Mb/second or 3 minute quality. This is 20 Gb/hour (7 disks). It would be very expensive to construct such a machine in terms of storage.

A more practical machine will sustain a single picture or two pictures at 2 Mb/second, plus a great deal of sound. This is equivalent to about 9-minute quality, and looks good.

All of this requires extremely large amounts of disk storage. About 150 Gb may be required on-line, which equates to 15-250 hours depending on quality.

There are also disclosed herein improvements in data compression techniques. Whilst these are of particular use in the context of the video editing system described above, they will be of use in other contexts only.

Techniques are known for compression techniques for the digital files that describe images. These are well documented in such sources as 'Digital Image Processing' by William K Pratt, published by John Wiley & Sons, ISBN 0-471-01888-0.

These techniques include the simpler methods such as run length coding, which will give a compression ratio of typically around 3:1. Whilst such methods are of some use, it is often desirable to have a system that will give a compression ratio which is much higher. One such method is the scheme referred to as 'JPEG', being the method established by the Joint Photo-Interpreters Experts Group. This method is a highly mathematical technique involving the two-dimensional discrete Cosine transform, as explained in "Digital Imaging Processing" pages 242-247. The JPEG technique is currently a Draft International Standard for the coding of Continuous Tone Still Images, ISO DIS 10918, and offers users compression ratios of up to 50:1 with little image degradation. The principle of JPEG is as follows:-
1. Divide the image up into regular tiles. Each tile is either 8x8 pixels or 16x16 pixels.
2. Take the two-dimensioned DCT of each block. Mathematically this is implemented by taking the DCT of each of the lines of eight (or sixteen) pixels in each of the eight (or sixteen) lines per block, writing the answer back into that address of the block, and repeating the operation on each of the columns. This is possible because the 2-D DCT has a mathematical property known as separability. At this point no compression has taken place, but the data has been decorrelated.
3. Each block then has its energy assessed. This can be done in many ways, such as summing the squares of the 2nd to 64th coefficient in the block.
4. Classification then takes place dependant on energy. Blocks are then labelled into High, Medium, and Low energy, with various classes between.
5. Dependant on which class each block is in, it is thresholded (ie. an offset is removed from each element), and quantised (ie. it is represented as a nearest multiple of a constant.
6. The remaining data (which will contain a large number of zeroes) is then run length, or Huffman coded to reduce the data even further.
7. The remaining bits are then 'packeted' with a header and information on the energy class. Error correction is quite often added at this stage.
8. Decoding is the reverse of coding.

A further scheme is MPEG, the Motion Picture Experts Group. This is described in Draft International Standard ISO/TEC DIS 11172. This offers potentially higher compression ratios, by comparing subsequent frames of a motion picture sequence.

For most digital imaging, it is usual to have 'scan lines'. The Image is represented as a sequential sequence of values, describing the intensity (or brightness) of picture elements (pixels). Thus the data structure consists of the brightness value of the first pixel in the first line, followed by the second pixel of the first line, and then subsequent pixels of the first line through to the last pixel of the first line. Then the data structure contains the brightness value of the first pixel of the second line through to the last pixel of the second line. This is continued through to the last line of the image. This is a 'normal' image data structure.

It is, however, sometimes necessary to describe a given image in more than one resolution. Such an example may be where a very high resolution image is to be eventually created, such as a full page colour picture for a high quality magazine. This picture may consist of, say 5000 lines of 4000 picture elements each. This resolution is far higher than can easily be displayed on a colour monitor, such devices being typically less than 1000 lines by 1500 pixels. Thus at a 'one-to-one' resolution only a small part of the final image can be displayed. A typical solution to this dilemma is to store a reduced resolution or subsampled version of the final image which is the same resolution as the colour monitor.

There will be described below a data compression technique which is versatile and of particular, but not exclusive, benefit in a video editing system as described above.

This data compression technique includes a method for compressing digitised image data in data handling means, wherein:-
(a) a plurality of different image resolutions are provided from given source material; and
(b) data in respect of different respective image resolutions is compressed by different respective amounts.

In the preferred arrangement, higher resolution images may be compressed by lower amounts.

Thus, for example there may be a "pyramidal" or "Laplacian" structure. At the bottom may be a high resolution image, for example corresponding to broadcast quality source material. This will be compressed by a relatively small amount, such as 8 or 10:1, to minimise picture degradation. Higher up the pyramid there will be a picture at lower resolution, for example for use in the video editing system described above. This will be compressed by a greater amount, and for example 20:1.

At the top of the "theoretical" data structure there is one singular value, describing the overall average brightness of the picture. The resolution level below this would be, say 2x2 rather than 1x1. Below that, the resolution level will be 4x4 and so forth. Instead of describing a complete level, the difference could be stored between the previous level and the predicted level, predicted by linear interpolation.

Different techniques could be used at different levels. Thus, for example, at a level for use as the relatively low quality image, used in the editing system described earlier, the resolution may be set by omitting alternate lines. By contrast at a level for produced HDTV quality images the resolution may be set by averaging out groups of say four pixels.

Preferably, a plurality of compression operations are carried on by parallel compressors. It is known, for example, to use parallel compressors to compress different parts of a particular image. For example four compressions could be used, each for quarter of the image. By contrast, in preferred implementations of this system parallel processing techniques are carried out on different respective resolution levels. Thus one processor may handle certain low resolution levels whilst one or more can simultaneously handle higher resolution levels. At the lower resolution, a single processor may be able to handle a number of levels in the time that it takes one, two or more to handle a single high resolution level.

An advantage of this arrangement is that when a compressed image is required, all desired resolutions can be obtained simultaneously.

Thus in the context of the video editing system described earlier, source material may be taken in to the first data handling means. There, parallel processors will work on (a) high resolution, mildly compressed files for use in the first data handling means; and (b) lower resolution more highly compressed files for use in the second data handling means.

It will be appreciated that the compression and other techniques described herein may be used in systems other than the editing of films, video tapes and the like.

There will now be described some embodiments of the invention, by way of example only and with reference to the accompanying drawings, in which:

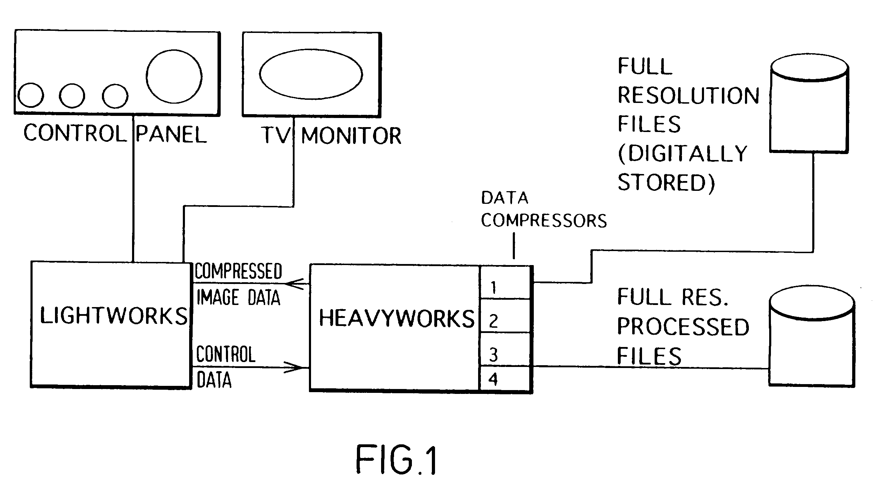

Figure 1 shows diagrammatically apparatus in accordance with the invention;
Figure 2(a) shows how conventional parallel data compression works;
Figure 2(b) shows a pyramidal data structure, with different levels covering different resolution; and
Figure 2(c) shows how compressors can be used in parallel on these different levels.

The "Heavyworks" machine represents the first data handling means which may for example be an EISA system with a 66 MHz Intel 486 DX processor or a 586 processor, and say 16 Mb or more of RAM. The "Lightworks" machine represents the second data handling means. This may be an ISA system with a 33 MHz Intel 486 DX processor, again with 16 Mb or more of RAM. This unit is provided with a control panel and a monitor. The "Heavyworks" unit takes in full resolution digitally stored files, and provides compressed image data for the "Lightworks" unit where edit decisions are made. Control data is then passed back to enable processing of full resolution files.

The procedure of the communication flow can be considered by the process that the operator would go through in a real job. It is as follows:-
1. All material that may be required in a given job will be 'digitised' into the Heavyworks unit.
2. At the Lightworks terminals, the operator will require a 'clip list' from the Heavyworks unit. This will be the list of all clips available at the Heavyworks unit.
3. From this list, the operator will request that several of these clips are made available for him at his Lightworks terminal.
4. This request will be passed over the link between the two machines, and the Heavyworks unit will process the requested clips into 'Lightworks' form. This is a lower quality higher data compressed form. They will then be transmitted over the link to the lightworks terminal.
5. Having received the clips, the operator will now perform the non linear editing functions necessary to form a complete work. As he makes each decision, this decision is communicated over the link to the Heavyworks.
6. During the process of the construction of a low quality version of the final work on the lightworks, the Heavyworks unit will be continually creating a high quality representation of this work with its own high quality digitised files. It is acknowledged that this process is not 100% efficient, as the operator is likely to change his mind several times in the artistic process of creating a completed work, and this will involve several unnecessary conforming steps. However, it has the advantage of minimising the time between the operator finishing the work on the lightworks and the work being available on the heavyworks station in 'on-line' quality.

As regards the hardware of the link, there are several suitable communication media. The first is the Bit Parallel form of Recommendation 601 of the CCIR. The second is the bit serial form of the above. The third is using the SCSI protocol (Small Computer, Systems Interface). This is usually the protocol used by small computers for talking to their discs, but a 'dual ported' version exists in which there can be two 'masters', which could be the Lightworks and Heavyworks units respectively. A fourth format of the communication media could be the FDDI (Fibre Distributed Data Interchange). This is the standard for Fibre Optics systems. Yet another standard could be the 'Ethernet' protocol, of transmitting computer to computer communications over Co-Axial cable.

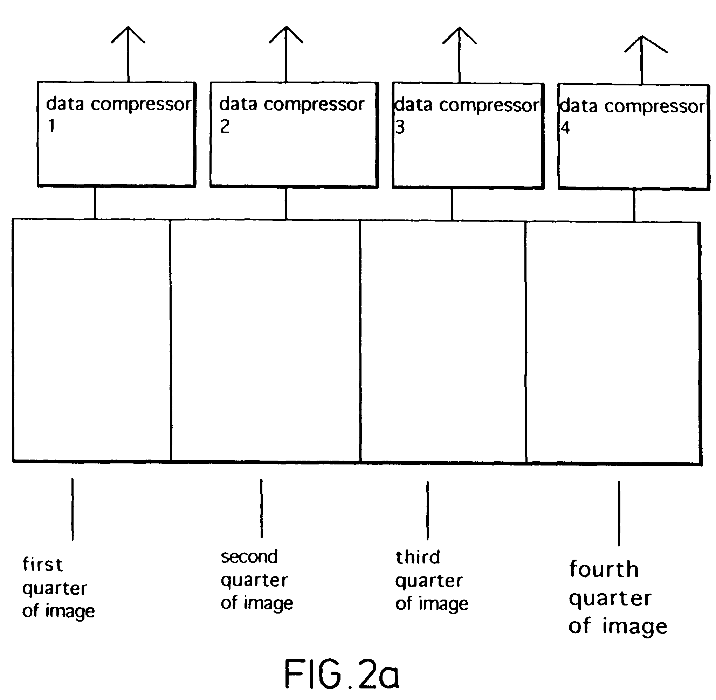

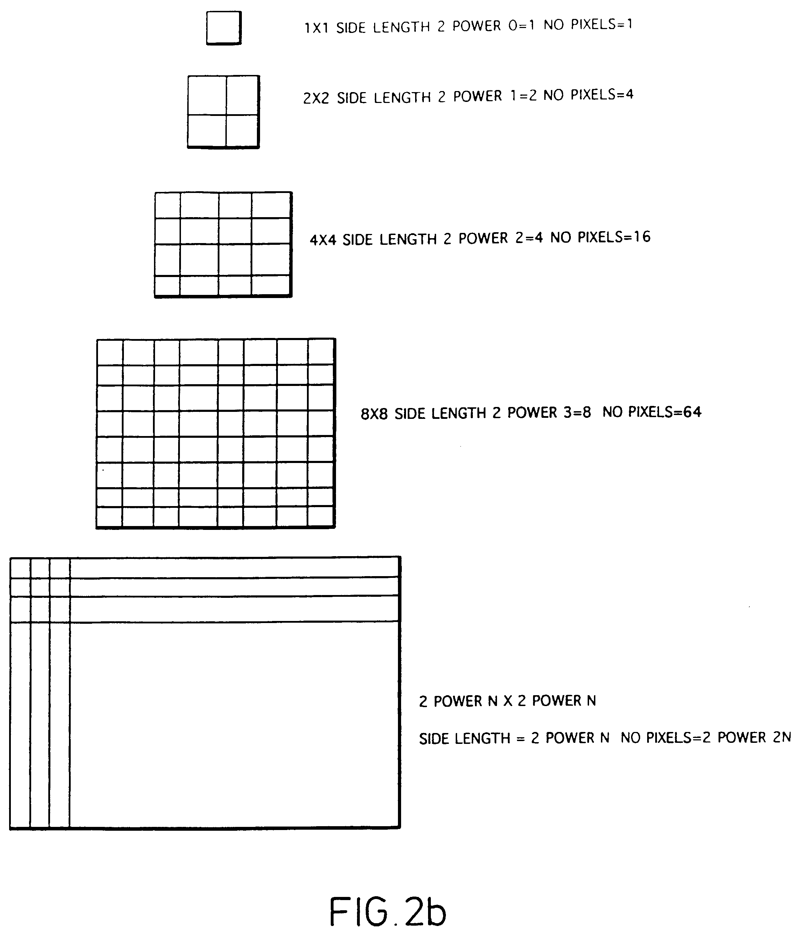

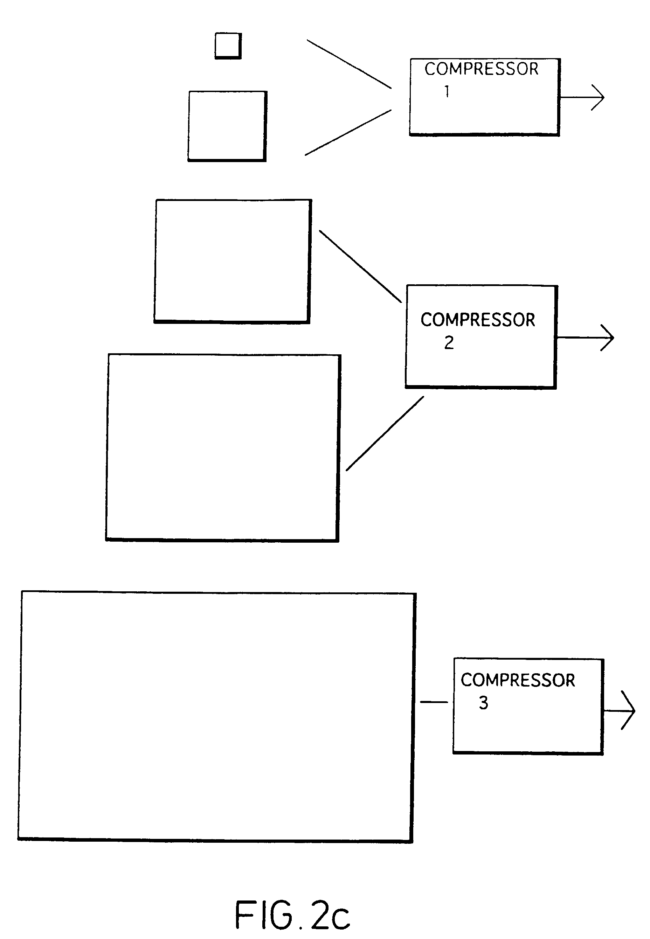

Figure 2(a) shows how conventional parallel data compression works. Each quarter of an image is compressed by its own compressor. Figure 2b shows a pyramidal data structure, with different levels covering different resolution. At the top is a single pixel, whose value is the average of the entire image. Lower down are higher resolution images. Figure 2c shows how compressors can be used in parallel on these different levels. Thus three compressors work in parallel. One handles the top two layers, one the next two, and one the bottom. As noted earlier, the degree of compression for the lower layers - that are the highest resolution - may be more gentle than for higher levels.
Nevertheless, the same degrees of compression could be applied and the concept of using parallel compressors in this way is advantageous.

Thus, there is provided a method for compressing digitised image data in data handling means wherein:-
(a) a plurality of levels of different image resolution are provided from given source material; and
(b) a plurality of data compression means act in parallel on respective levels.

There has now also been developed an improved system for generating the levels of different image resolutions. Starting at the highest resolution, it is necessary to store data in respect of that resolution, and in respect of the next level - i.e. the lower resolution image to be processed in the "Lightworks" unit. This lower resolution image may have one quarter of the pixels of the first level, this being achieved by averaging out the value of four pixels in the first level. Thus, if four adjacent pixels forming a square in the first level have values A, B, C, D, then the corresponding single pixel in the level above will have the value (A+B+C+D)/4.

Each value requires 8 bits and thus 40 bits are required to store data for this part of the image, in both resolutions.

According to an improved method, less data needs to be stored. The value of the single pixel of the second level is still stored as (A+B+C+D)/4 and requires 8 bits. There are then stored three difference expressions, namely:-
(A+B+C-D)/4
(A+B-C+D)/4
(A-B+C+D)/4

From these it is possible, using simultaneous equation techniques, to derive the values of A, B, C and D.

The three difference equations require 9 bits (8 for the number and 1 for the sign). Thus the total data to be stored is 8 bits plus 3 x 9 bits, i.e. 35 bits. This is a saving of 5 bits over storing the pixel values separately.

Over an entire image there is a significant saving in the amount of data to be stored.

There is still immediate access to the lower resolution values. There is a delay in access to the higher resolution values as these have to be derived. However, that is acceptable in the context of the video editing systems described herein.

Thus, there is provided a method of storing data relating to an image, comprising the steps of:-
(a) Providing an image as a series of pixels, at a first resolution;
(b) Storing data relating to a second, lower resolution version of the image in which the value of each pixel is calculated as an average of a number of associated pixels at the first resolution; and
(c) Storing data from which the values of'the associated pixels can be calculated by a simultaneous equation technique.

## Claims

1. A system for editing video material comprising:
(a) first digital data handling means for receiving and storing a sequence of image frames of relatively high quality;
(b) means for converting the sequence of image frames into a corresponding sequence of image frames of relatively low quality;
(c) second digital data handling means for receiving and storing the sequence of relatively low quality image frames;
(d) operator input means associated with the second data handling means to enable manipulation of the sequence of relatively low quality image frames for edit decisions to be made;
(e) communication means connected between the first and second data handling means, for communicating to the first data handling means edit decisions after manipulation of the frames in the second data handling means; and
(f) means within the first data handling means for producing an output sequence of relatively high quality image frames in accordance with the edit decisions communicated from the second data handling means, characterised over this disclosure in that the edit decisions are communicated to the first data handling means substantially as such decisions are made; and in that the system further comprises
(g) means within the first data handling means for processing a first edit decision, and for manipulating the relatively high quality image frames accordingly, whilst the operator manipulates the relatively low quality frames in the second data handling means to make a second edit decision for communication to the first data handling means.

2. A system as claimed in claim 1, wherein the first data handling means preferably includes means for reducing the resolution of the images and/or compressing the data, for supply to the second data handling means.

3. A system as claimed in claim 2, wherein
(a) a plurality of different image resolutions are provided from given source material; and
(b) data in respect of different respective image resolutions is compressed by different respective amounts.

4. A system as claimed in claim 3, wherein, in the first data handling means, parallel processors will work on (a) high resolution, mildly compressed files for use in the first data handling means; and (b) lower resolution more highly compressed files for use in the second data handling means.

5. A system as claimed in claim 2, 3 or 4, comprising the steps of:-
(a) Providing an image as a series of pixels, at a first resolution;
(b) Storing data relating to a second, lower resolution version of the image in which the value of each pixel is calculated as an average of a number of associated pixels at the first resolution; and
(c) Storing data from which the values of the associated pixels can be calculated by a simultaneous equation technique.

## Patentansprüche

1. System zum Editieren von Videomaterial, mit:
(a) einer ersten Vorrichtung zur Bearbeitung digitaler Daten, die eine Sequenz von Bildframes relativ hoher Qualität empfängt und speichert;
(b) einer Vorrichtung zum Umwandeln der Sequenz von Bildframes in eine entsprechende Sequenz von Bildframes mit relativ niedriger Qualität;
(c) einer zweiten Vorrichtung zur Bearbeitung digitaler Daten, die die Sequenz von Bildframes relativ niedriger Qualität empfängt und speichert;
(d) einer Eingabevorrichtung für einen Bediener, die mit der zweiten Datenbearbeitungsvorrichtung verbunden ist, um eine Manipulation der Sequenz von Bildframes relativ niedriger Qualität zum Treffen von Schnittentscheidungen (sog. "Edit Decisions") zu ermöglichen;
(e) einer zwischen der ersten und der zweiten Datenbearbeitungsvorrichtung geschalteten Kommunikationsvorrichtung, um nach der Manipulation der Bildframes in der zweiten Datenbearbeitungsvorrichtung Schnittentscheidungen an die erste Datenbearbeitungsvorrichtung zu übertragen; und
(f) einer Vorrichtung innerhalb der ersten Datenbearbeitungsvorrichtung zum Erzeugen einer Ausgabesequenz von Bildframes relativ hoher Qualität gemäß den von der zweiten Datenbearbeitungsvorrichtung übertragenen Schnittentscheidungen, über die vorliegende Offenbarung hinaus dadurch gekennzeichnet, daß die Schnittentscheidungen im wesentlichen während diese Entscheidungen getroffen werden an die erste Datenbearbeitungsvorrichtung übertragen werden; und dadurch, daß das System des weiteren folgendes umfaßt:
(g) eine Vorrichtung innerhalb der ersten Datenbearbeitungvorrichtung zur Verarbeitung einer ersten Schnittentscheidung, und zum entsprechenden Manipulieren der Bildframes relativ hoher Qualität, während der Bediener die Bildframes relativ geringer Qualität in der zweiten Datenbearbeitungsvorrichtung manipuliert, um eine zweite Schnittentscheidung zur Übertragung an die ersten Datenbearbeitungsvorrichtung zu treffen.

2. System nach Anspruch 1, wobei die erste Datenbearbeitungsvorrichtung vorzugsweise eine Vorrichtung zur Verringerung der Auflösung der Bilder und/oder zum Komprimieren der Daten aufweist, für die Übertragung an die zweite Datenbearbeitungsvorrichtung.

3. System nach Anspruch 2, wobei
(a) eine Vielzahl verschiedener Bildauflösungen von gegebenem Quellenmaterial bereitgestellt wird, und
(b) Daten bezüglich unterschiedlicher entsprechender Bildauflösungen in unterschiedlichem entsprechenden Umfang komprimiert werden.

4. System nach Anspruch 3, wobei in der ersten Datenbearbeitungsvorrichtung parallele Prozessoren (a) geringfügig komprimierte Dateien mit hoher Auflösung zur Verwendung in der ersten Datenbearbeitungsvorrichtung; und (b) stärker komprimierte Dateien mit geringerer Auflösung zur Verwendung in der zweiten Datenbearbeitungsvorrichtung bearbeiten.

5. System nach Anspruch 2, 3 oder 4, mit folgenden Schritten:
(a) Bereitstellen eines Bildes als Serie von Pixeln mit einer ersten Auflösung;
(b) Speichern von Daten einer zweiten Version des Bildes mit geringerer Auflösung, in der der Wert eines jeden Pixels als Durchschnitt einer Anzahl von zugehörigen Pixeln mit der ersten Auflösung berechnet wird; und
(c) Speichern von Daten, aus denen sich die Werte der zugehörigen Pixel durch eine gleichzeitige Gleichungstechnik berechnen lassen.

## Revendications

1. Système de montage de matières vidéo comportant:
(a) un premier moyen de traitement de données alphanumériques pour recevoir et mettre en mémoire une séquence de trames d'images de qualité relativement élevée:
(b) un moyen de transformation de la séquence de trames d'images en séquence correspondante de trames d'images de qualité relativement faible;
(c) un deuxième moyen de traitement de données alphanumériques pour recevoir et mettre en mémoire la séquence de trames d'images de qualité relativement faible;
(d) un moyen d'entrée par l'opérateur associé avec le deuxième moyen de traitement de données pour faciliter la manipulation de la séquence de trames d'images de qualité relativement faible pour permettre les décisions de montage;
(e) des moyens de communication raccordés entre les premier et deuxième moyens de traitement de données, pour communiquer au premier moyen de traitement de données les décisions de montage suite à la manipulation des trames dans le deuxième moyen de traitement de données; et
(f) un moyen dans le premier moyen de traitement pour produire une séquence de sortie trames d'images de qualité relativement élevée conformément aux décisions de montage communiquées depuis le deuxième moyen de traitement de données, caractérisé en sus de cette exposition en ce que les décisions de montage sont communiquées au premier moyen de traitement de données essentiellement lors de la prise desdites décisions; et en ce que le système comporte en outre
(g) un moyen dans le premier moyen de traitement des données pour traiter une première décision de montage, et pour le traitement des trames d'images de qualité relativement élevée, lors de la manipulation par l'opérateur des trames d'images de qualité relativement faible dans le deuxième moyen de traitement des données de façon à prendre une deuxième décision de montage pour la communiquer au premier moyen de traitement des données.

2. Système tel que revendiqué à la revendication 1, selon lequel le premier moyen de prise en charge de données comporte de préférence un moyen de réduction de la résolution des images et/ou la condensation des données, pour les fournir au deuxième moyen de prise en charge des données.

3. Système tel que revendiqué à la revendication 2, selon lequel
(a) une pluralité de résolutions différentes d'image est prévue à partir d'une source donnée; et
(b) les données se rapportant à des résolutions respectives diverses d'image sont condensées selon des montants respectifs divers.

4. Système tel que revendiqué à la revendication 3, selon lequel au premier moyen de prise en charge des données, des processeurs parallèles fonctionnent sur (a) des fichiers de home résolution légèrement condensés pour l'exploitation dans le premier moyen de prise en chargé de données, et (b) des fichiers de résolution plus faibles plus fortement condensés pour l'exploitation dans le deuxième moyen de prise en charge des données.

5. Système tel que revendiqué à la revendication 2. 3 ou 4, comportant les phases suivantes:
(a) fourniture d'une image sous forme d'une série de pixels, selon une première résolution;
(b) mise en mémoire de données se rapportant à une version de deuxième résolution inférieure de l'image dont la valeur de chaque pixel est calculée comme moyenne du nombre de pixels associés en première résolution; et
(c) mise en mémoire de données dont les valeurs de pixels associés peuvent être calculées par une technique d'équation simultanée.
